(19) Europäisches Patentamt
European Patent Office
Office européen des brevets

(11) **EP 4 349 579 A1**

(12) **EUROPEAN PATENT APPLICATION**

(43) Date of publication:
**10.04.2024 Bulletin 2024/15**

(21) Application number: **22306472.6**

(22) Date of filing: **04.10.2022**

(51) International Patent Classification (IPC):
**B29D 11/00** $^{(2006.01)}$   **B29C 64/129** $^{(2017.01)}$

(52) Cooperative Patent Classification (CPC):
**B29C 64/129; B29C 64/35; B29D 11/00009;**
**B29D 11/00326; B29D 11/00442; B29D 11/00865;**
**B33Y 10/00; B33Y 40/20; B33Y 80/00;**
B29D 11/00269; B29D 11/00298

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Essilor International**
**94220 Charenton-Le-Pont (FR)**

(72) Inventors:
• **LECOMPERE, Maxime**
  **94700 Maisons -Alfort (FR)**
• **GUILLOT, Matthieu**
  **92130 Issy Les Moulineaux (FR)**

(74) Representative: **Santarelli**
**Tour Trinity**
**1 bis Esplanade de la Défense**
**92035 Paris La Défense Cedex (FR)**

(54) **METHOD FOR MANUFACTURING AN OPTICAL DEVICE COMPRISING A MICROSTRUCTURE, MANUFACTURING SYSTEM TO CARRY OUT SUCH A METHOD, AND OPTICAL DEVICE THUS OBTAINED**

(57)    Method for manufacturing an optical device (1) comprising steps of obtaining a transparent base (2) comprising a free surface (21) having a predetermined curvature, immersing at least a part of the free surface (21) into a first curable material (14); determining a first grey scale image (12) representing a microstructure (3) to create on the part of the free surface (21); projecting the first grey scale image (12) over the part of the free surface (21) by UV-light having a predetermined intensity; curing a volume of the first curable material (14) over the part of the free surface (21) by irradiating said volume of first curable material (14) through the transparent base (2). Optical device (1) manufactured by such a method, and system for manufacturing such an optical device (1) by such a method.

Fig.1

**Description**

TECHNICAL FIELD

The disclosure relates to a method for manufacturing an optical device comprising a microstructure, and a manufacturing system configured to carry out such a method. The disclosure also related to the optical device thus obtained.

BACKGROUND ART

Document WO2019002905 discloses a method of producing an optical device from a volume of a curable composition in which portions of said volume are polymerized by irradiating, with a light irradiation, an external surface of said volume and optionally an upper portion previously polymerized. In such a method, said light irradiation has a light intensity which varies over said external surface thanks to the use of a spatial light modulator (i.e. which modifies locally the light intensity over the surface), and may vary over time too. Polymerization is thus performed continuously from portion to portion of the curable composition.

On another hand, in optical devices like ophthalmic lenses, specific surface morphologies, including a microstructure, can be useful for providing specific effects, and/or controlling various vision impairments.

For example, micro-lenses can be useful in an ophthalmic lens in order to reduce myopia progression, in particular for kids.

It is therefore desired to provide a method for manufacturing an optical device comprising a specific surface morphology, like microstructure, which can be flexible to use, in particular more flexible to form lenslets or other shapes than other technologies, like diamond turning or lithography, or injection or casting processes, and which enables to make such microstructure on surface or ultimately encapsulated inside the optical device, for instance a lens.

SUMMARY

According to a first aspect, it is provided a method for manufacturing an optical device comprising a microstructure from a transparent base, comprising steps of:

- Obtaining the transparent base comprising a free surface on at least a part of which a microstructure is to be created, the free surface having a predetermined curvature;
- Immersing at least the part of the free surface into a first curable material;
- Determining a first grey scale image representing the microstructure to create on the part of the free surface;
- Projecting the first grey scale image over the part of the free surface of the transparent base by ultraviolet light having a predetermined intensity;
- Curing a volume of the first curable material over the part of the free surface by irradiating said volume of the first curable material through the transparent base with the ultraviolet light first grey scale image providing different doses of light over the part of the surface, thus forming the microstructure on the part of the free surface of the transparent base.

A transparent base here encompasses a substrate as well as a film for example.

"Transparent" here means that the base allows at least 1%, or preferably at least 80%, of light to pass through at a given wavelength, in particular here at least UV light. For example, 1% of 1000 mw/cm$^2$ gives 10 mw/cm$^2$ which is already very good for some chemistry. The rate can strongly depend on the chemistry reactivity under UV.

The first grey scale image, projected by a DMD (digital micro-mirror device) for example, acts like a projection pattern.

The first grey scale image therefore enables irradiating at least a part of the free surface with a light beam for a predetermined exposition time, and at a predetermined intensity. Depending on the grey level at one point (pixel) in the image, a specific corresponding light dose is provided to a corresponding point of the surface, leading to a corresponding height of microstructure made of the first curable material which has been cured at that point of the surface.

It is worth noting here that grey level or grey scale means a pattern in the UV range light.

Grey level modulation by the projecting device can then be avoided over the time.

Thus, such a method enables to form, on at least a part of a transparent base, a modified surface which comprises a microstructure, in a single step, by Volumic Additive Manufacturing, with no need to make layers.

Different heights of the microstructure, compared to the free surface of the transparent base, can be produced at a same time, during a same step, owing to the first greyscale image.

The method therefore locally provides different doses (for example measured in millijoules (mJ)), and not different intensities (for example measured in milliwatt by square centimeters (mW/cm$^2$)). The intensity is the same, it does not change or very little, but light is distributed differently in time over the part of the surface thanks to the grey levels, and according to an example embodiment, thanks to an associated vibration of micro-mirrors of a DMD.

Here, in other words, a design to be produced is obtained with one calculated image pattern and one calculated irradiation time. Both are inextricably linked: to change a design to be produced, both have to be changed.

Suh a method thus allows making personalized or customized optical devices, like lenses.

According to one embodiment, the step of determining the first grey scale image comprises a step of determining a height of the microstructure for each pixel compared to free surface.

According to one embodiment, the method comprises a step of displacing of the transparent base compared to a grey scale image projection tile, and a step of generating another first grey scale image according to the displacement of the transparent base.

According to one embodiment, the method comprises a step of removing at least part of residual first curable material from the optical device by spinning at least the optical device.

According to one embodiment, the method comprises a step of washing at least the surface of the microstructure with a washing material, a step of removing the surface of the microstructure from the washing material and a step of spinning the optical device.

For example, such steps are performed before a step of immersing at least the surface of the microstructure into a second curable material as mentioned below.

According to one embodiment, the method comprises a step of immersing at least a surface of the microstructure into a second curable material.

According to one embodiment, the method comprises a step of emptying a container comprising the first curable material in which at least one surface of the microstructure is immersed while the transparent base is maintained by a blocker, and a step of filling the second curable material in the container while the transparent base is kept on the blocker.

According to one embodiment, the method comprises a step of washing at least the surface of the microstructure (3) with the second curable material, a step of removing the surface of the microstructure (3) from the second curable material and a step of spinning the optical device (1), before the step of immersing at least the surface of the microstructure (3) into the second curable material.

According to one embodiment, the method comprises the steps of:

- Determining a second grey scale image in accordance with the surface of the microstructure (3) and a design of an encapsulation layer (4) to produce to encapsulate at least a part of the microstructure (3);
- Projecting the second greyscale image with UV light over at least the part of the surface of the microstructure (3);
- Curing a volume of the second curable material over the part of the surface of the microstructure (3) by irradiating said volume with second grey scale UV light image through the transparent base and the microstructure (3), thus encapsulating at least the part of the microstructure (3).

According to a second aspect, it is provided an optical device manufactured by the method as described above.

As micro-mirrors in a DMD are not perfectly joined, corresponding discontinuities can be found in the material which could eventually be detected with fairly powerful machines.

Furthermore, some designs are very difficult, or nearly impossible to obtain in any other way; for example, diffractive or encapsulated lenslets on a surface would be very difficult to manufacture with a mould.

The present above described method makes it possible to produce, in one go, what would require several steps for moulding/counter-moulding to obtain a same product.

For example, epi-fresnel lenses would be a very difficult design to achieve otherwise.

For example, the optical device comprises a microstructure formed on at least a surface of a transparent base.

For example, the optical device comprises an encapsulation layer, the microstructure being encapsulated under the encapsulation layer.

For example, the microstructure comprises at least one among a lenslet, a diffusion element, a diffraction element, and/or a Pi-Fresnel lenslet.

According to a third aspect, it is provided a system for manufacturing an optical device as described above.

For example, the system is configured to implement the method as described above.

For example, the system mainly comprises:

- a container for containing a volume of a curable material,
- a DLP projector comprising a UV light source configured to emit UV light at a predetermined intensity, and
- a digital micro-mirror device being configured to project at least one greyscale image in a projection tile inward the container with the UV light.

Optional features presented above in connection with the proposed method may also apply to such a system.

The present disclosure can be used for any kind of optical devices, such as an optical lens or ophthalmic element or device.

Non-limiting examples of ophthalmic elements include corrective and non-corrective lenses, including single vision or multi-vision lenses, which may be either segmented or non-segmented, as well as other elements used to correct, protect, or enhance vision, including without limitation, magnifying lenses and protective lenses or visors such as found in spectacles, glasses, goggles and helmets.

The above described embodiments may therefore have the following advantages:

- make any type of microstructure (lenslets: refractive, diffractive, diffusive) on either a flat or curved transparent base;
- make microstructure directly on any transparent base (a lens or other elements like molds (glass or plastics), inserts (glass or metal), wafers, films, etc);
- make a microstructure having a different index than that of the transparent base (for encapsulation for example);
- make optical device in at least two parts of different index for encapsulation of microstructure;
- make personalized microstructures (powers, density, type of array, areas on the lens) depending on the wearer (for example depending on his sensitivity to contrast reduction, on his activity, on his retina shape, on his myopia (or other sight disease, or ametropia) progression speed, etc...);
- provide a non-layered process.

In case of encapsulation, the following additional advantages may be provided:

- Microstructure is protected by an encapsulation layer;
- Chemistry used for the microstructure cannot have necessarily usual thermomechanical properties suitable for ophthalmic application (HDT ~ 80°C, E > 2GPa, etc...) because they will be embedded inside a suitable one. This enables more flexibility, typically to design chemistries with a high refractive index;
- No problem of hardcoat deposition due to design of the microstructure, as the encapsulation layer may provide a smooth top surface
- Very high refractive index can be used for microstructure with a material which does not necessarily fit with the requirement of ophthalmic application.

BRIEF DESCRIPTION OF THE DRAWINGS

Advantageous embodiments are described hereinafter by way of non-limiting example and with reference to the appended drawings.

Figure 1 shows an example embodiment of an optical device in which a microstructure is formed on a surface of a transparent base;

Figure 2 shows an example embodiment of an optical device in which a microstructure is formed inside the optical device;

Figure 3 diagrammatically illustrates one example embodiment of an optical device comprising lenslets in which aspherical lenslets are arranged in concentric rings;

Figure 4 diagrammatically shows unifocal lenslets;

Figure 5 diagrammatically shows bifocal lenslets;

Figure 6 diagrammatically shows Pi-Fresnel lenslets;

Figure 7 presents an example embodiment of a system for manufacturing an optical device like illustrated in Fig.1 or Fig. 2;

Figure 8 illustrates a manufacturing system according to one example embodiment;

Figure 9 diagrammatically illustrates a profile of lenslets to form on a transparent base's surface according to one example embodiment;

Figure 10 diagrammatically illustrates a profile of lenslets to form on a transparent base's surface according to another example embodiment;

Figure 11 schematizes an experiment to identify parameters of Jacob's equation (Ec and Dp);

Figure 12 illustrates a greyscale image to form refractive spherical lenslets (10 $\mu$m pixel size) for myopia;

Figure 13 illustrates a greyscale image to form diffractive Pi-Fresnel lenslets (5$\mu$m pixel size) for myopia;

Figure 14 illustrates a relative displacement of a grey scale image projection tile compared to the transparent base when the projection tile is smaller than the transparent base;

Figure 15 shows a calculated image for refractive spherical lenslets (10 $\mu$m pixel size, 4k projector);

Figure 16 shows a calculated image to produce base radius of curvature CX = 500 mm, lens diameter = 70 mm with a DLP having 35 $\mu$m pixel size 4k resolution.

## DETAILED DESCRIPTION OF EXAMPLE EMBODIMENTS

The following disclosure deals with technology of additive manufacturing for manufacturing of ophthalmic lenses, in order to reduce myopia progression, for example for kids.

For example, it is here described lenslets manufacturing by volumic additive manufacturing specific technologies.

The disclosed method enables to provide optical devices with any surface shape, in particular ophthalmic lenses for myopia control using lenslets. However, this could be enlarged to other topics than myopia control depending on the microstructure created for example.

To be noted that an ophthalmic lens can be any ophthalmic device for spectacles lenses or other devices adapted for a wearer and having ophthalmic properties.

To be noted also that the additive manufacturing method can be carried out according to any existing suitable technology, such as for instance technologies included in the definition given by the reference ISO/ASTM 52900:2021, or corresponding references.

The structural aspects of optical lenses are described thereafter. An optical lens comprises a microstructure that may be arranged on the convex front side (also called object-side) or on the concave rear side (also called eyeballside) main surface of the optical lens, or on both main surfaces.

A microstructure comprises at least one lenslet.

A lenslet modifies the power of an input light for producing an output light by modifying either its power either its phase

Lenslets may form bumps and/or recesses at the main surface they are arranged onto. The outline of the lenslets may be round or polygonal, for example hexagonal.

A lenslet may be spherical, toric, or have an aspherical shape, rotationally symmetrical or not. A lenslet may have a single focus point, or cylindrical power, or non-focusing point. In preferred embodiments, lenslets can be used to prevent progression of myopia or hyperopia. In that case, the base lens substrate comprises a base lens providing an optical power for correcting myopia or hyperopia, and the lenslets may provide respectively an optical power greater than the optical power of the base lens if the wearer has myopia, or an optical power lower than the optical power of the base lens if the wearer has hyperopia.

Lenslets may also be Fresnel structures, diffractive structures such as lenslets defining each a Fresnel structure, permanent technical bumps or phaseshifting elements. It can also be a refractive optical element such as microprisms and a light-diffusing optical element such as small protuberances or cavities, or any type of element generating roughness on the substrate.

Lenslets can also be $\pi$-Fresnel lenslets as described in US2021109379 A1, i.e. Fresnel lenslets which phase function has $\pi$ phase jumps at the nominal wavelength, as opposition to unifocal Fresnel lenses which phase jumps are multiple values of $2\pi$. Such lenslets include structures that have a discontinuous shape. In other words, the shape of such structures may be described by an altitude function, in terms of distance from the base level of the main surface of the optical lens the lenslet belongs to, which exhibits a discontinuity, or which derivative exhibits a discontinuity.

The lenslets of the present invention may have a contour shape being inscribable in a circle having a diameter greater than or equal to 0.5 micrometers ($\mu$m) and smaller than or equal to 2.5 millimeters (mm).

The lenslets of the present invention have a maximum height, measured in a direction perpendicular to the main surface they are arranged onto, that is greater than or equal to 0.1 $\mu$m and less than or equal to 50 $\mu$m. Said main surface can be defined as a surface, that can be a plano, spherical, sphero cylindrical or even complex surface, that includes the central point of every microstructures. This main surface can be a virtual surface, when microstructures are embedded in the lens or close or identical to the ophthalmic lens physical outer surfaces when microstructures are not embedded. The height of the microstructure can be then determined using local perpendicular axis to this main surface, and calculating for the each point of the microstructure the difference between the maximum positive deviation minus the minimum negative deviation to the main surface, along the axis.

Lenslets may have periodical or pseudo periodical layout, but may also have randomized positions. Exemplary layouts for lenslets may be a grid with constant grid step, honeycomb layout, multiple concentric rings, contiguous e.g. no space in between microstructures.

These structures may provide optical wave front modification in intensity, curvature, or light deviation, where the intensity of wave front is configured such that structures may be absorptive and may locally absorb wave front intensity with a range from 0% to 100%, where the curvature is configured such that the structure may locally modify wave front curvature with a range of +/- 20 Diopters, and light deviation is configured such that the structure may locally scatter light with angle ranging from +/- 1° to +/- 30°.

A distance between structures may range from 0 (contiguous) to 3 times the structure (separate microstructures).

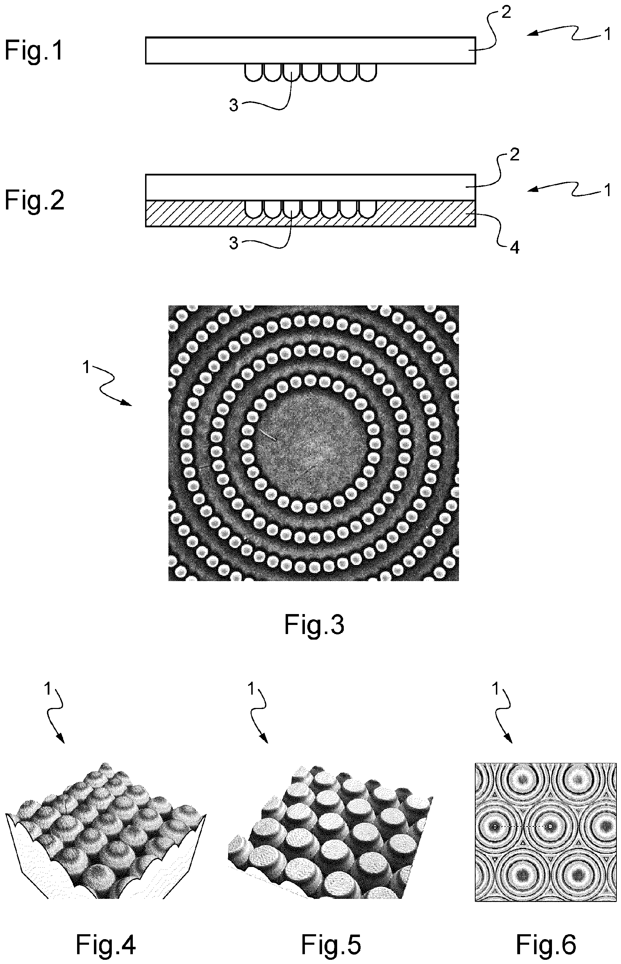

In the present example, some types of lenslets designs and lenses, as optical devices, are first described in connection with figures 1 to 6.

Nowadays, there are various design solutions of optical devices, like ophthalmic lenses or contact lenses, that can slow down myopia progression. Examples are based on the use of microstructures like optical lenslets that create a signal of defocus or of non-focused light in front of the retina. Such lenslets slow down the eye elongation process or also named "myopisation" process.

Such a microstructure is formed either on a surface of a transparent base 2 of an optical device 1, as illustrated in Fig. 1, or inside the optical device 1, like illustrated in Fig. 2, for example by volumic additive manufacturing.

More specifically here, Fig. 2 shows an optical device 1 comprising a transparent base 2 and a micro-structure 3 which can even be formed by a Material A on a surface of a transparent base 2 at a first step, and then encapsulated in another material, Material B, afterwards, at a second step, leading to a microstructure made of Material A which is finally formed inside the optical device 1, the later then including the transparent base 2, the microstructure 3 and an encapsulation 4 covering the microstructure 3.

According to one example embodiment, the elements of the microstructure can be arranged in concentric rings and comprise aspherical lenslets that create multiple volumes of non-focused light in front of the retina.

Such an arrangement is diagrammatically illustrated in Figure 3.

According to another example embodiment, not illustrated here, the lenslets are arranged in a pattern of spherical lenslets on a hexagonal array and in "independent island-shaped" that create multiple defocus in front of the retina.

Other studies of diffusive/scattering lenselet have also proven good results on myopia control efficacy.

Other shape of microstructure have also appeared interesting for different sight disease control.

It therefore appeared interesting to be able to manufacture optical devices with a microstructure, either on the surface of the element, or inside the element itself as well, depending on the case.

It also appeared interesting to be able to manufacture optical devices with a microstructure of very different shapes, for example diffusive lenslets, scattering lenslets, diffusive or scattering dots, refractive lenslets (for example unifocal lenslets like illustrated in Fig. 4, or bifocal lenslets like illustrated in Fig. 5, or torical lenslets), diffractive lenslets (for example Pi-Fresnel lenslets like illustrated in Fig. 6), etc; and optionally with second optical function for myopia control that can be spherical or aspherical, or other shapes.

For example, the lenslets of one optical device can have a "gradient law", meaning a variation of the optical function of the lenslets (for example a surface power of aspherical lenslets varies with the location of the lenslet on the lens e.g. depending on the lens eccentricity), or can have a mix of at least two of the different forms of lenslets.

Documents WO2022112531A2, WO2022112533A1, or WO2022112534A1 disclose refractive, diffractive, diffusive lenslets.

However, all these shapes would be very difficult to form in an optical device with the usual optical device manufacturing methods and corresponding systems.

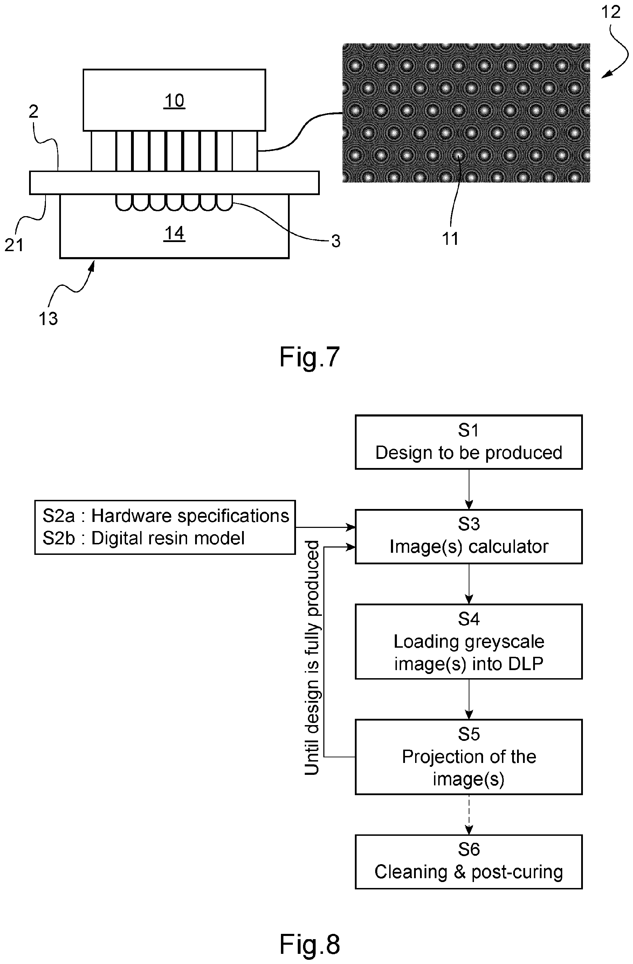

An example embodiment of a method for manufacturing such an optical device and of a corresponding system are described in connection with figures 7 to 16.

In the described embodiment, volumic additive manufacturing method is used to manufacture a microstructure on a predetermined surface.

This method uses a DLP projector 10 projecting a UV light greyscale image 12 over a projection tile 11 to cure a volume of a material 14, for example a resin, at a specific/predetermined place. In other words, the greyscale image 12 is able to selectively activate the curing of the material 14 in a predetermined area. Thus, the higher the light dosage, is provided to one point, the thicker will be the voxel of cured material 14 (as described in Jacobs's equation, as detailed below).

For example, the image pattern is generated (calculated) to form an image document file (like a .tiff, .jpg, .png document file, or like). It is a greyscale image that will be loaded into a DLP which is composed of an LED and a DMD. The DMD is like de "grid" which can "structure" the light coming from the LED. In other word, the DMD "pixelizes" or "shape" the light flow. Each micro-mirror of the DMD can be controlled individually. For a grey level of 256 (white), the micro-mirror (or the pixel) will stay "open" (the light flow is passing). For a grey level "0", it will stay close (the light flux is stop). For a grey level 128, the micro-mirror will alternate "open" and "close" state providing half light dosage compared to the 256 grey level.

Fig. 7 shows an example embodiment of a system to carry out such a method.

For example, the system for manufacturing an optical device comprises such a DLP projector 10.

The DLP projector 10 comprises a light source which is configured to emit light at a predetermined intensity, and in a prescribed wavelength range, for example in the UV (ultraviolet) range, for example wavelength comprised between 190 nm and 550 nm, more particularly comprised between 300 nm and 420 nm.

To this end, the light source comprises, for example, LEDs to emit light in the desired wavelengths range.

For example, the DLP projector 10 comprises here a UV videoprojector.

The DLP projector 10 is also configured to provide a desired greyscale light pattern (image) 12 which is displayed in a projection tile 11.

To this end, the DLP projector 10 comprises a DMD (digital micro-mirror device).

A DMD comprises hundreds, or even thousands, of microscopic mirrors arranged in an array. One micro-mirror corresponds to one pixel in the image projected. The micro-mirrors can be individually rotated to be positioned in either an "on" position or an "off" position. In the "on" position, light from the light source is reflected into the lens making the pixel of the image appear bright, whereas in the "off" position, the light is directed elsewhere, i.e. not into a projection tile 11, making the pixel appear dark. To produce greyscales, the micro-mirror is toggled on and off at a predetermined frequency, and the ratio of "on" time to "off" time determines the shade produced (also named "binary pulsewidth modulation").

Owing to greyscale, intermediate values of light energy can therefore be provided.

Thus, the light intensity remains merely identical, whereas the light dosage varies from one pixel to another.

For example, screen projectors, like DLP (Digital Light Processor) are able to provide different levels of greys over a 2D plan. Micro-mirrors of a DMD embedded inside the DLP are able to vibrate up to 256 different frequencies, or even 1024, and therefore, to generate up to 256, or even 1024, different light energies over a single projection tile (that is to say one image) so 256, or even 1024, grey levels from "dark" to "white", and 254 (or 1022) intermediate grey levels.

For example, the greyscale image 12 which has to be projected over one surface to generate the microstructure, is calculated regarding a digital material (resin) model which takes into account the evolution of the thickness cured under light over the time and the grey level.

As an example of a digital material model, modified Jacobs's equation can be used to predict the greyscale to be provided regarding the height of the voxel to be polymerized for a predetermined time.

Accordingly, the DLP projector 10 also comprises a container 13 for containing a volume of a curable material 14.

To grow microstructure 3 on a surface 21 of a transparent base 2, the surface 21 is positioned relative to the projection tile 12.

The light emitted by the light source passes through the transparent base 2 to reach the curable material 14 to grow microstructure on the surface 21.

According to an interesting embodiment, the system also comprises a blocker configured to maintain at least the transparent base of the optical device 1 at a predetermined position.

Fig.8 gives a flowchart of method steps to produce a designed optical device.

Two example embodiments of contiguous lenslets produced according to the chart of Fig. 8 are described: refractive spherical lenslets, and diffractive Pi-Fresnel.

For example, the transparent base can be an optical element, for example made of MR7, MR8, ORMA, etc...

Here for the example, bi-plan ORMA (refractive index RI = 1.498) is selected transparent base.

It is worth noting that the transparent base must transmit a minimum of energy of the light of the emitting light source in order to be able to cure the material (resin) with which microstructure will be formed on a surface of the transparent base. To this respect, transparent base and/or light source can be adapted, depending on the optical device to manufacture.

Step S1: Designs to be produced

First Design

In Step S1, a design to be produced is the shape that must be cured on the transparent base.

On the above-mentioned transparent base, according to a first design, it is desired to form refractive spherical lenslets.

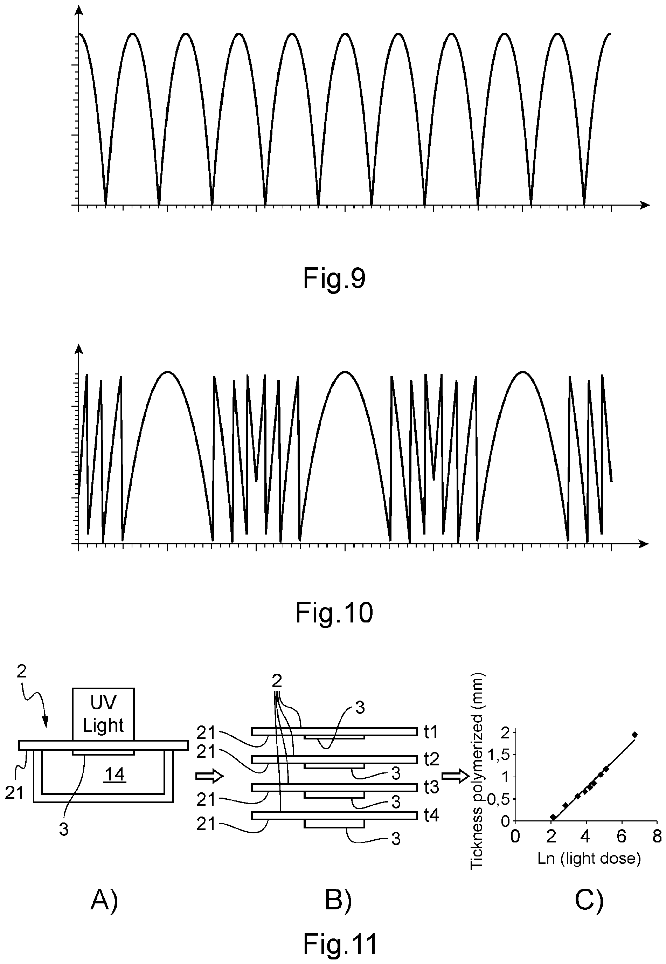

A cross-section of such microstructure 3 is diagrammatically represented in Fig. 9.

In this diagram, abscise represents a length of the microstructure 3 (in particular a diameter of lenslets), while ordinate represents a height of the microstructure 3 (a height of the lenslets).

Thus, in this diagram, nine lenslets, and two halves on either side are represented.

All the lenslets are here identical, with same heights and same diameters.

Second design

On the above-mentioned transparent base, according to a second design, it is desired to form diffractive Pi-Fresnel lenslets.

Such a profile is diagrammatically represented in Fig. 10.

As in fig. 9, abscise of Fig. 10 represents a length of the microstructure 3, while ordinate represents a height of the microstructure 3.

Thus, in Fig. 10, three diffractive Pi-Fresnel lenslets are represented.

All these lenslets are here identical, with same heights and same diameters.

Step S2a: Hardware specifications

The projector utilized here, in a system as described in connection with Fig. 7, has the following specifications:

- Resolution: 3840x2160 pixels (4k)
- Pixels sizes: 35 $\mu$m or 10 $\mu$m or 5 $\mu$m (pixel size is setup according to the required accuracy with (de)focusing system)
- Projection tile 11: 134,4 x 75,6 mm, or 38,4 mm x 21,6 mm, or 19,2 x 1,08 mm
- Emission wavelength of the LED of the light source: 365 nm
- Light intensity of the LED: 10 mW/cm$^2$

Step S2b: Digital material model

In the present example, Jacobs's equation is used as a digital material model because it fits well with the corresponding experiment, as described in connection with Fig. 11 below.

However, it is worth noting that the digital material model does not necessarily follow Jacobs's equation. This strongly depends on the "material response" under exposition. Thus, another equation model can be used instead of Jacob's equation.

Thus, here, the digital material model which fits with a resin used for the present described example embodiment is based on Jacobs's equation as follows:

$$E(z) = Ec * exp[z/Dp]$$

Where:

- Z is the thickness (in $\mu$m) of material to polymerize, corresponding to a height compared to the transparent base's surface
- E(z) is the energy dosage to be provided to polymerize a material thickness of z, in millijoule by square centimeter (mJ/cm$^2$)
- Ec is the minimum energy to be provided to polymerize a non-null thickness (i.e. energy threshold) in millijoule; here Ec = 10,9 mJ;
- Dp is the light Depth Penetration in micromter; here Dp = 11 $\mu$m.

The light penetration depth (Dp) represents the distance the light crosses the resin before being absorbed at about 35%.

The critical energy (Ec) shows the minimum light dose to provide to switch the material from liquid to solid state.

This means that a light dosage (E) above the critical energy (Ec) is needed in order to polymerize the material on the transparent base.

On another hand, the energy (light dosage) provided is also function of the grey level, intensity and time of light irradiation, as follows:

$$E = GS * I * t$$

Where:

- GS is the grey level which variate from 0 to 1,
- I is the intensity of the emitted light in milliwatt by square centimeter (mW/cm$^2$),
- t is the exposition time in seconds (s).

By replacing energy dosage with expression containing greyscale value, we obtain:

$$GS(z) = \frac{tc}{t} * exp[z/Dp])$$

$$tc = \frac{Ec}{I}.$$

Where $tc = \frac{Ec}{I}$.

In this example, Ec and Dp are determined by linearization of the Jacobs's equation consisting to measure polymerized thickness for different light dosage.

For example, one experiment was carried out as follows, as schematized in Fig. 11:

(i) A transparent base 2 comprising here a glass plate transparent to UV light is placed on a curable material 14 comprising here a liquid resin, as illustrated in Fig. 11 A).

(ii) A square of UV light (for example in this case at 365 nm) is projected across the transparent base 2.

(iii) Steps (i) and (ii) are repeated for different irradiation times t1, t2, t3 and t4 (with t1<t2<t3<t4), as illustrated in Fig. 11 B),

the polymerized thickness is then measured with a caliper,

this shows that the higher is the irradiation time (light dose), the thicker is the polymerized structure.

(iv) Finally, the polymerized thickness (in mm) vs. In(E) is plotted ("Working Curve") as illustrated in Fig. 11 C), and fitted with Jacob's equation to reach Ec and Dp.

Composition of the material used 14

In this example, the material 14 to polymerize, used to form the microstructure 3, is a resin, the properties of which are obtained while formulating compound as follows:

| Chem. Compounds | Role | Part (g/L) |
|---|---|---|
| Acrylates | Monomer/Oligomer | - |
| Phenazine | UV-Absorber | 5.188 |
| Avobenzone | UV-Absorber | 2.297 |
| Omnirad 819 | Photoinitiator | 5.5 |

Due to the relatively high level of UV-Absorber, special mixing has to be applied.

Acrylate monomers/oligomers resin is heated to 50°C, then UV-Absorbers are added progressively under vigorous stirring during 3 days.

Then, vigorous stirring continues for one week, at 50°C.

After one week, the resin is cooled slowly to 23°C and the photoinitiator is added, and mixing continues for 24 hours.

The formulation is filtered with a 1 $\mu$m filter and Dp is controlled.

The refractive index of the material (resin) after curing is about 1.498, leading to:

- 0/+4dp simultaneous powers ($\lambda$ = 550nm) for diffractive Pi-Fresnel lenslets (described above);
- +2.75dp for the design of refractive spherical lenslets (described above);
- different optics of lenslets can be defined in order to change the power, or the ratio of efficiency at 550 nm, or with materials of different refractive index, by changing the curvatures and sags of lenslets and so adapting the manufacturing parameters, or encapsulation solutions can also be envisaged with lower difference of refractive index (described below).

Step S3: Image calculator

The image calculator is a numerical tool (e.g. script) which converts "Design to be produced" (step S1 of Fig. 8) into greyscale image by taking into account hardware specifications and digital material model.

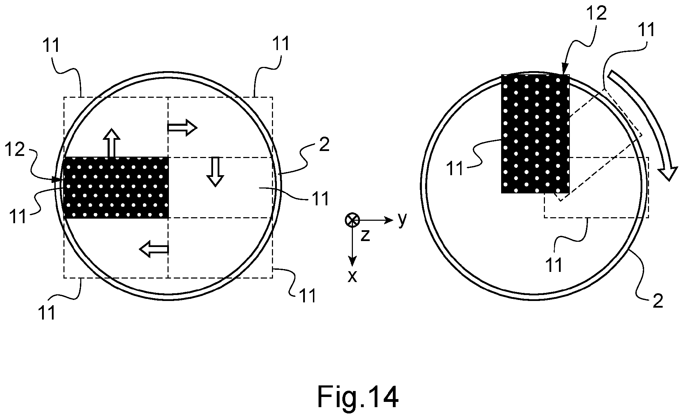

It also cuts the image for sequential projection if the projection tile 11 is smaller than the whole design to be produced (as illustrated in Fig. 14 for example).

Step S4: Greyscale image(s) to be projected loaded into DLP

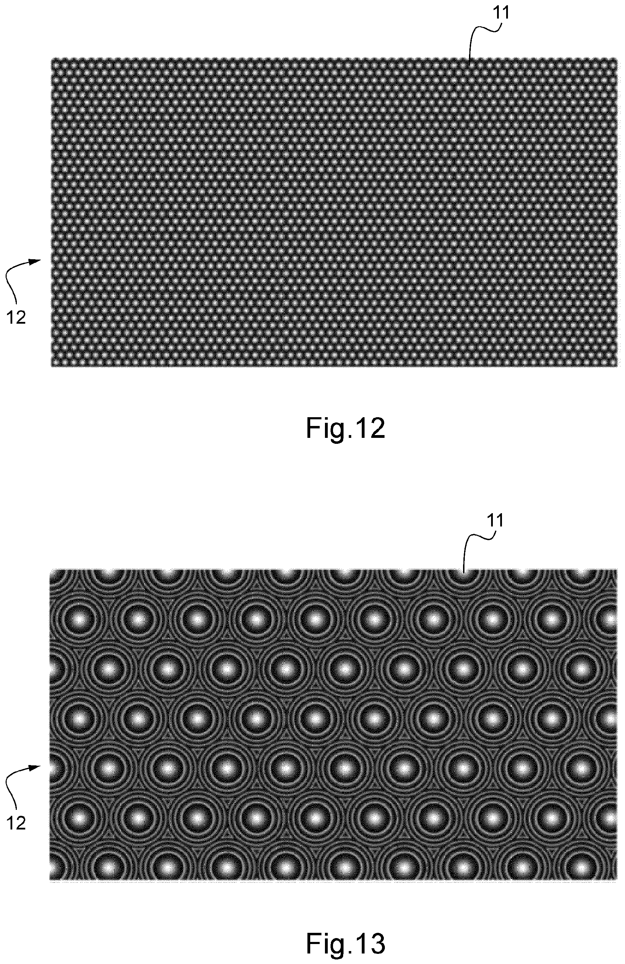

For illustrative purposes, Fig. 12 and Fig. 13 show greyscale images to form lenslets for myopia, which correspond to the profiles of Fig. 9 and Fig. 10.

More specifically, Fig. 12 illustrates a greyscale image to form refractive spherical lenslets (10 $\mu$m pixel size) corresponding to the profile of Fig. 9, and Fig. 13 illustrates a greyscale image to form diffractive Pi-Fresnel lenslets (5 $\mu$m pixel size) corresponding to the profile of Fig. 10.

Step S5: Projection of the image(s)

The at least one image generated is projected on the surface 21 of the transparent base 2 which is at least in contact with the curable material 14.

This step would also be called "curing".

The image is projected according to time calculated by image calculator, for example:

- 26.75 seconds in the case of refractive spherical lenslets (Fig. 12)
- 43.25 s in the case of diffractive Pi-Fresnel lenslets (Fig. 13)

When using the greyscale image for creating microstructure, it can be relevant to activate this greyscale image (i.e. light on the image) into multiple time, in particular when the propagation frontier (between cured and uncured material) of cured material releases a lot of thermal energy due to polymerization process.

When printing high resolution microstructure having high spatial frequencies, such a Fresnel structure, the propagation of such front along the Z axis (height compared to the surface of the transparent base) leads to diffraction/scattering, thus altering the initial desired shape of the microstructure.

This leads to unwanted light distribution in further Z direction, caused by constructive/destructive interferences, that are difficult, or even not possible, to compensate by changing the illumination pattern.

In the same way, if there is a need to create scattering/diffusive microstructure on the transparent base at specific position, it is desirable, for analogous reason, to activate the greyscale image when the propagation front is reaching this position to limit unwanted light distribution in the propagation front.

As an example, if there is a need to provide a lens having a microstructure on one surface, it may be desired to use a first greyscale image to create propagation front corresponding to the lens power (low spatial frequencies) and then, when the propagation front is close to the position of the desired microstructure, to display a second greyscale image for creating a propagation front corresponding to the microstructure.

In this case, the microstructure is positioned on the transparent base surface being most distant from light source.

Step S6: cleaning and post curing

After the microstructure 3 is formed, the method can further comprise a step of cleaning the surface of the optical device 1 thus obtained.

For example, the transparent base with the microstructure 3 is spinned to remove the residual material 14 from the surface of the optical device 1.

Case of the size of the projection tile lower than the size of the surface on which microstructure is to be formed

If the size of the projection tile 11 is smaller than the surface 21 of the transparent base 2 where the microstructure (lenslets) has to be formed, the manufacturing of the optical device is done by a relative displacement of the projection tile 11 compared to the transparent base 2. This is illustrated by Fig. 14.

The relative movement can be sequential or continuous.

If the displacement is continuous, a "video film" has to be used, i.e. a series of images.

In that way, greyscale image is regenerated as a function of a frequency of displacement of the projection tile 11, and of the discretization of the theoretical shape of the microstructure by "pixelation" (ex: greyscale image is regenerated each time relative movement between projection tile 11 and transparent base 2 is about 1 pixel size).

First variant embodiment

It has been shown that, in order to control myopia, a design of lenslets can be more diverse. For example, diffusion elements can be used.

In that way, it is also possible in this disclosure to use a translucent material to build an optical control element of myopia.

Translucent material can be easily formulated by adding fillers inside the curable material and thus obtain a translucent material able to control the myopia.

Second variant embodiment

It has also been shown that, in order to control myopia a design of lenslets can be more diverse. For example, diffraction elements can also be used.

Diffraction can be generated with a process of the present disclosure by altering, focusing and blurring the DLP.

Diffraction can be generated from DMD.

Usually diffraction generated by pixels/DMD/DLP is considered as an optical defect in additive manufacturing of conventional optical transparent base.

Optional embodiment

Since it is possible to build an optical element (a microstructure) on another one (for example on a transparent base as described above), it is also possible to encapsulate the microstructure (lenslets) into an additional microstructure (for example in a polymer matrix), then called here "encapsulation layer" 4.

This can be done by the same process described before, but in order to keep the optical function, the encapsulation layer 4 shall have a different refractive index.

To this end, after building the microstructure 3 (set of lenslets), the curable material 14 is changed and the process is applied with a new (a second) digital material model, and eventually other hardware specifications.

The container 13 containing the first curable material 14 is thus emptied.

Optionally, the method comprises a step of racking of the container.

Then, the same container 13 is filled with said second curable material.

Step 6 can also be applied to the optical device 1 thus obtained afterwards.

Example:

*Composition of the resin used for microstructure 3 comprising lenslets (refractive index: 1.72X at solid state):*

| Chem. Compounds | Role | Part (g/L) |
|---|---|---|
| Acrylates | Monomer/Oligomer | - |
| Avobenzone | UV-Absorber | 4.204 |
| Omnirad 819 | Photoinitiator | 5.5 |

Its curing properties also follow Jacobs's equation.

It results that Ec = 25,2 mJ, and Dp = 12 $\mu$m.

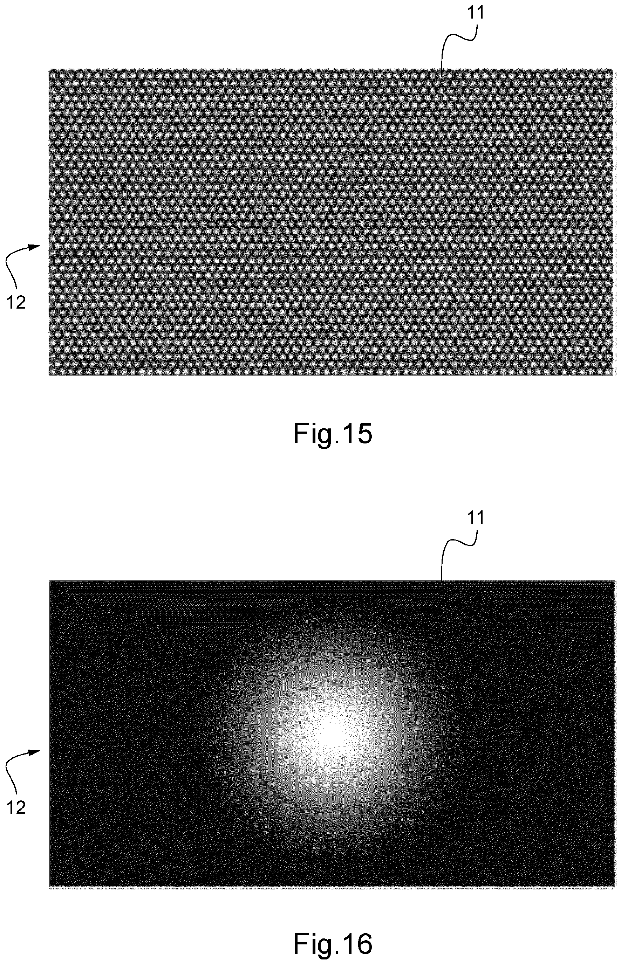

The applied calculated image for refractive spherical lenslets (Matrice ML2D joined P4D, lambda = 550nm, dn = 0.073, diameter=0.6mm, 10 $\mu$m pixel size, 4k projector) is as illustrated in Fig. 15.

Irradiation time is set for example to 38.978 s.

Then, the transparent base with the microstructure 3 is spinned to remove the residual material 14.

After this first microstructure 3 is formed (i.e. formation of the lenslets), the resin is changed with the following example:

*Composition of the resin used for encapsulating lenslets (refractive index: 1.498 at solid state):*

| Chem. Compounds | Role | Part (g/L) |
|---|---|---|
| Acrylates | Monomer/Oligomer | - |
| Avobenzone | UV-Absorber | 0.013 |
| Omnirad 819 | Photoinitiator | 5.5 |

Its curing properties also follow Jacobs's equation (Ec = 21 mJ, Dp ~ 0.39 $\mu$m).

The applied calculated image (for CX = 500 mm, lens diameter = 70 mm) is as shown in Fig. 16 for refractive spherical lenslets (35 μm pixel size, 4k projector).

The irradiation time is set to 48,75 s in this example embodiment.

In that way, the lenslets will be encapsulated of a CX 500 mm design having an arrow (thickness at the center of the encapsulation layer) of 1.227 mm.

It is worth noting that the image calculated takes into account the first microstructure 3 since a height (thickness) of material 14 has been previously polymerized and therefore the optical path has been modified.

It is also worth noting that the image calculated should also take in account the transparent base design and its optic, the case being. Indeed, the transparent base modifies the projection pattern.

It is also to be noted that encapsulation induces an increase of height design of total microstructures on the transparent base. This is an advantage regarding the process used here because the thinner the microstructure, the more difficult it is to ensure accuracy of polymerization.

This is for example the case for spherical lenslets.

On spherical lenslets, compared to a non encapsulated lenslets of 2.75dp and 0.6 mm size like previously defined with a diopter 1.498/air (with a difference of index of 0.498), here between two transparent bases of RI = 1.72 and 1.49 there will be a difference of index of 0.23, so more than two times smaller.

Thus, the curvature of encapsulated spherical lenslets to manufacture will need to be at least two times smaller, so their sags at least two times bigger, in order to get the same power of +2.75dp after encapsulation.

For the same reasons, there may be a need to increase the Fresnel curvatures to compensate for the effect of refractive index difference, except that it will not be to rebalance the power of lenslets, but to rebalance the ratio of efficiency of both main orders of diffraction 0 and +1 (the power at 550 nm remaining constant, due to the specific characteristics of Pi-Fresnel design).

## Claims

1. Method for manufacturing an optical device (1) comprising a microstructure (3) from a transparent base (2), comprising steps of:

   - Obtaining the transparent base (2) comprising a free surface (21) on at least a part of which a microstructure (3) is to be created, the free surface (21) having a predetermined curvature;
   - Immersing at least the part of the free surface (21) into a first curable material (14);
   - Determining a first grey scale image (12) representing the microstructure (3) to create on the part of the free surface (21);
   - Projecting the first grey scale image (12) over the part of the free surface (21) of the transparent base (2) by ultraviolet light having a predetermined intensity;
   - Curing a volume of the first curable material (14) over the part of the free surface (21) by irradiating said volume of the first curable material (14) through the transparent base (2) with the ultraviolet light first grey scale image (12) providing different doses of light over the part of the surface (21), thus forming the microstructure (3) on the part of the free surface (21) of the transparent base (2).

2. Method according to claim 1, in which the step of determining the first grey scale image comprises a step of determining a height of the microstructure (3) at each pixel compared to free surface (21).

3. Method according to anyone of claims 1 or 2, comprising a step of displacing of the transparent base (2) compared to a grey scale image projection tile, and a step of generating another first grey scale image according to the displacement of the transparent base.

4. Method according to anyone of claim 1 to 3, comprising a step of removing at least part of residual first curable material (14) from the optical device (1) by spinning at least the optical device (1).

5. Method according to anyone of claims 1 to 4, comprising a step of washing at least the surface of the microstructure (3) with a washing material, a step of removing the surface of the microstructure (3) from the washing material and a step of spinning the optical device (1).

6. Method according to anyone of claims 1 to 5, comprising a step of immersing at least a surface of the microstructure (3) into a second curable material.

7. Method according to claim 6, comprising a step of emptying a container comprising the first curable material (14) in which at least one surface of the microstructure (3) is immersed while the transparent base (2) is maintained by a blocker, and a step of filling the second curable material in the container while the transparent base (2) is kept on the blocker.

8. Method according to anyone of claims 6 or 7, comprising a step of washing at least the surface of the microstructure (3) with the second curable material, a step of removing the surface of the microstructure (3) from the second curable material and a step of spinning the optical device (1), before the step of immersing at least the surface of the microstructure (3) into the second curable material.

9. Method according to anyone of claims 6 to 8, comprising steps of:

    - Determining a second grey scale image in accordance with the surface of the microstructure (3) and a design of an encapsulation layer (4) to produce to encapsulate at least a part of the microstructure (3);
    - Projecting the second greyscale image with UV light over at least the part of the surface of the microstructure (3);
    - Curing a volume of the second curable material over the part of the surface of the microstructure (3) by irradiating said volume with second grey scale UV light image through the transparent base and the microstructure (3), thus encapsulating at least the part of the microstructure (3).

10. Optical device (1) manufactured by the method according to anyone of claims 1 to 9, **characterized in that** it comprises a microstructure (3) formed on at least a surface of a transparent base (2).

11. Optical device (1) according to claim 10, which comprises an encapsulation layer (4), the microstructure (3) being encapsulated under the encapsulation layer (4).

12. Optical device (1) according to anyone of claims 10 or 11, in which the microstructure (3) comprises at least one among a lenslet, a diffusion element, a diffraction element, and/or a Pi-Fresnel lenslet.

13. System for manufacturing an optical device (1) according to anyone of claims 10 to 12, and the system being configured to implement the method of anyone of claims 1 to 9, the system comprising:

    - a container (13) for containing a volume of a curable material (14);
    - a DLP projector (10) comprising a UV light source configured to emit UV light at a predetermined intensity, and a digital micro-mirror device being configured to project at least one greyscale image in a projection tile inward the container with the UV light.

Fig.1

Fig.2

Fig.3

Fig.4

Fig.5

Fig.6

12

10

2

21

14

3

11

13

Fig.7

S1
Design to be produced

S2a : Hardware specifications
S2b : Digital resin model

S3
Image(s) calculator

Until design is fully produced

S4
Loading greyscale
image(s) into DLP

S5
Projection of the
image(s)

S6
Cleaning & post-curing

Fig.8

Fig.9

Fig.10

A)                              B)                              C)

Fig.11

Fig.12

Fig.13

Fig.14

Fig.15

Fig.16

Europäisches
Patentamt

European
Patent Office

Office européen
des brevets

# EUROPEAN SEARCH REPORT

**Application Number**

EP 22 30 6472

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/273666 A1 (WARDEN LAURENCE [US] ET AL) 10 November 2011 (2011-11-10) | 1,2,6,7, 9-11,13 | INV. B29D11/00 |
| A | * abstract * <br> * paragraphs [[0049]], [[0050]]; figure 4D * | 3-5,8,12 | B29C64/129 |
| X | WO 2021/214197 A1 (ESSILOR INT [FR]) 28 October 2021 (2021-10-28) | 10-12 | |
| A | * abstract * <br> * figures 1a-6 * <br> * paragraphs [0087], [0088], [0137], [0138], [0147] * | 1-9,13 | |
| X | US 2021/162540 A1 (HOUBERTZ RUTH [DE] ET AL) 3 June 2021 (2021-06-03) | 13 | |
| A | * abstract * <br> * figures 1-10 * <br> * paragraph [0092] * | 1-12 | |

**TECHNICAL FIELDS SEARCHED (IPC)**

B29D
B29C

The present search report has been drawn up for all claims

| Place of search | Date of completion of the search | Examiner |
|---|---|---|
| The Hague | 8 March 2023 | Heckmann, Paul |

EPO FORM 1503 03.82 (P04C01)

## ANNEX TO THE EUROPEAN SEARCH REPORT
## ON EUROPEAN PATENT APPLICATION NO.

EP 22 30 6472

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2023

| Patent document cited in search report | | Publication date | Patent family member(s) | | Publication date |
|---|---|---|---|---|---|
| US 2011273666 | A1 | 10-11-2011 | US | 2005105048 A1 | 19-05-2005 |
| | | | US | 2007153232 A1 | 05-07-2007 |
| | | | US | 2009251663 A1 | 08-10-2009 |
| | | | US | 2011273666 A1 | 10-11-2011 |
| WO 2021214197 | A1 | 28-10-2021 | AU | 2021258459 A1 | 27-10-2022 |
| | | | BR | 112022019482 A2 | 16-11-2022 |
| | | | CA | 3176576 A1 | 28-10-2021 |
| | | | CN | 115398278 A | 25-11-2022 |
| | | | EP | 3816677 A1 | 05-05-2021 |
| | | | KR | 20230002352 A | 05-01-2023 |
| | | | WO | 2021214197 A1 | 28-10-2021 |
| US 2021162540 | A1 | 03-06-2021 | EP | 3287263 A1 | 28-02-2018 |
| | | | US | 2021162540 A1 | 03-06-2021 |
| | | | WO | 2018036929 A1 | 01-03-2018 |

EPO FORM P0459

For more details about this annex : see Official Journal of the European Patent Office, No. 12/82

**EP 4 349 579 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019002905 A
- US 2021109379 A1
- WO 2022112531 A2
- WO 2022112533 A1
- WO 2022112534 A1